# FASCICULE DE BREVET EUROPEEN

(11) **EP 1 333 222 B1**
(45) Date de publication et mention de la délivrance du brevet: **05.10.2005**
(21) Numéro de dépôt: 03290205.8
(22) Date de dépôt: 28.01.2003
(51) Int. Cl.: F16L 59/065, E04B 1/80

(54) **Procédé de fabrication d'un panneau à structure composite à parement de rigidité élevée, de très faible épaisseur et intégrant un super isolant sous vide**
Verfahren zur Herstellung einer dünnen Vakuum-Isolationsverbundplatte mit hochsteifen Verkleidungen
Method for making a thin composite vacuum insulation panel with high stiffness facings

(30) Priorité: 28.01.2002 FR 0200962
(43) Date de publication de la demande: 06.08.2003
(73) Titulaire: USINOR, 92800 Puteaux (FR)
(72) Inventeur: Bonnebat, Claude, 77340 Pontault-Combault (FR)
(74) Mandataire: Plaisant, Sophie Marie

(56) Documents cités:
- EP-A- 1 001 233
- WO-A-00/60292
- WO-A-01/38779
- US-B1- 6 168 040
- US-B1- 6 266 941

## Description

La présente invention concerne un procédé de réalisation d'une structure composite comprenant deux parements rigides sensiblement plans, reliés entre eux en insérant entre les parties planes de leur face interne une âme isolante composée d'une enveloppe fermée sous vide contenant un matériau poreux isolant.

Un tel procédé est connu par exemple de EP-A-1 001 233.

On qualifie de super isolants, des matériaux présentant, à température ambiante, un niveau de conductivité thermique λ inférieure à 10 mW/m.°K. On préfère les matériaux dont la conductivité thermique est inférieure à 7 mW/m.°K, et plus préférentiellement inférieur à 5 mW/m.°K.

La conductivité thermique de l'air étant de 25 mW/m.°K, et celles des gaz de plus faible conductivité thermique de l'ordre de 8 mW/m.°K, un matériau super isolant ne peut atteindre des niveaux de conductivité thermique de l'ordre de 10 mW/m°K, que si tous les gaz présents dans ce matériau sont évacués, d'où la nécessité de conditionner ce matériau sous vide et de garantir ce vide pendant toute la durée de vie du matériau conditionné.

Ainsi, des panneaux super isolants sous vide présentant une conductivité thermique cinq à sept fois plus faible que celle des panneaux isolants commerciaux usuels sont réalisés en conditionnant sous pression réduite une âme micro-cellulaire ou nano-cellulaire, à structure poreuse entièrement ouverte, au sein d'une enveloppe barrière souple constituée d'un film thermo-soudable qui permet en outre d'éviter la formation de ponts thermiques au niveau des tranches.

L'utilisation d'une âme poreuse micro-cellulaire ou nano-cellulaire conditionnée dans une simple enveloppe barrière souple thermosoudable pour réaliser un panneau super isolant sous vide présente cependant les inconvénients suivants :
- d'une part, l'enveloppe barrière est très mince, et est donc très fragile vis-à-vis de risques de perforation au contact de surfaces rigides ou à angles vifs,
- d'autre part, si le panneau sous vide réalisé avec cette enveloppe présente une bonne rigidité apparente, il ne tolère pas d'efforts de compression ou de flexion qui sont susceptibles d'allonger localement l'enveloppe et de dégrader ses propriétés barrières. En effet, la limite d'allongement tolérable d'une enveloppe barrière souple, sans dégradation de ses propriétés barrières, est de l'ordre de 1% si elle est composée d'une feuille d'aluminium mince, et inférieure à 3% si elle est composée d'un film par exemple de polyéthylène térephtalate métallisé ou à couche d'oxyde.

Les panneaux isolants sous vide conditionnés sous des enveloppes barrières souples thermo-scellées ne peuvent donc supporter aucun effort mécanique sans risque de dégradation de leurs performances barrières et de défaillance du système d'isolation complet.

De ce fait, il est difficile de garantir des durées de vie de 30 à 50 ans dans les conditions sévères d'utilisation rencontrées par exemple pour des panneaux de bâtiment dont la température de surface peut atteindre, voire dépasser 80°C dans le cas d'une utilisation dans les toitures.

Pour assurer la protection mécanique de ces panneaux super-isolants, on peut envisager de les insérer simplement par collage entre deux parements rigides comme par exemple des feuilles de métal, des plaques de bois, de verre ou de plâtre, de manière à former une structure composite.

Cependant cette pratique souffre des différentes limitations.

En effet, il est impossible de préparer une plaque d'isolant mise sous vide dans une enveloppe barrière présentant une surface parfaitement plane et uniforme. D'une part, dans le cas de l'utilisation d'âmes en matériau pulvérulent ou granulaire comme les silices de pyrolyse, le matériau de l'âme se déforme lui-même de façon plus ou moins inhomogène sous l'influence de la pression due au vide, ce qui donne lieu à la formation d'une plaque d'épaisseur non uniforme. D'autre part, du fait qu'il est nécessaire de partir d'une enveloppe de dimensions supérieures à celle de l'âme pour réaliser une bonne soudure, l'excédent de film enveloppe donne lieu, après mise sous vide, à la formation de plis plus ou moins marqués sur la surface de la plaque. Le collage du parement rigide sur l'enveloppe barrière, déjà mise sous vide et rétractée autour de l'âme isolante, ne peut donc pas s'effectuer de façon uniforme sauf si on utilise une grande quantité d'adhésif. Or, l'utilisation de grande quantité d'adhésif n'est pas souhaitable, car on accroît ainsi le pouvoir combustible de la structure composite.

Le but de l'invention est de réaliser un panneau à structure composite super isolante présentant un faible pouvoir combustible, et comprenant une âme micro ou nano-poreuse conditionnée sous vide dans une enveloppe barrière souple thermo-scellée et intégrée entre deux parements rigides. Ce but est atteint par les méthodes selon les revendications 1 ou 3.

L'invention a pour premier objet un procédé de fabrication d'un panneau à structure composite comprenant deux parements rigides sensiblement plans, reliés entre eux en insérant entre les parties planes de leur face interne, une âme comprenant un matériau poreux super isolant à structure micro cellulaire ou nano cellulaire à cellules ouvertes, ladite âme étant enfermée dans une enveloppe barrière étanche, fermée sous vide.

La description qui suit et ses figures annexées, données à titre d'exemple, feront bien comprendre l'invention.
La figure 1 présente, en coupe, un schéma d'un mode de réalisation particulier d'un panneau à structure composite selon l'invention.
La figure 2 est un schéma, en coupe, d'un exemple de finition de la tranche de la structure composite selon l'invention, c'est à dire la fermeture de l'espace périphérique de l'enveloppe barrière et de l'âme isolante, entre les parements rigides.
La figure 3 présente schématiquement, un autre exemple de finition de la tranche de la structure composite selon l'invention.

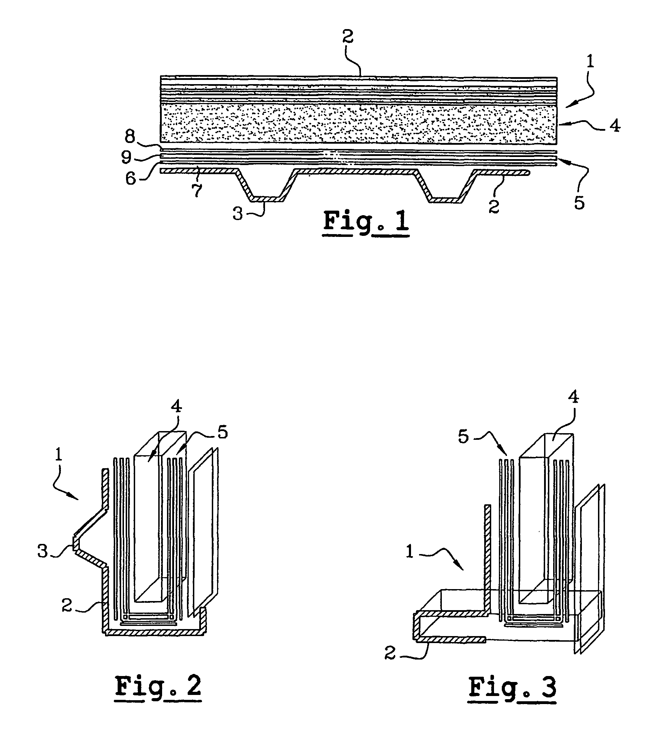

Dans ce mode de réalisation particulier, comme représenté sur la figure 1, la structure composite 1 selon l'invention comprend deux parements 2 rigides sensiblement plans et pouvant comporter des rainures de renfort et/ou de fixation 3, entre lesquels est insérée une âme 4 isolante, laquelle est enfermée sous vide dans une enveloppe barrière 5 souple et étanche.

L'âme 4 comprend au moins une plaque plane, d'épaisseur uniforme qui est préalablement découpée au format du panneau 1 à structure composite ou d'une partie du panneau 1 à structure composite à fabriquer.

Pour fabriquer des panneaux 1 à structure composite de grandes dimensions ou de forme particulière, il est possible de juxtaposer des plaques planes de matériau poreux isolant préalablement et individuellement conditionnées sous vide, et organisées dans l'enveloppe barrière 5.

Cette organisation des plaques sous vide permet de percer le panneau 1 à structure composite dans une zone quelconque, en limitant la perte de vide à la surface de la plaque soumise également au perçage.

L'au moins une plaque plane composant l'âme 4 est constituée d'un matériau poreux présentant une bonne résistance à la compression, pouvant être totalement évacué de l'air et des composés volatils qu'il contient lors de sa mise sous vide, et ne libérant pas de composés volatils ou de gaz ultérieurement au cours du temps. Les matériaux utilisés à cet effet doivent donc être éventuellement séchés car l'élimination de l'eau peut considérablement ralentir le processus de mise sous vide.

Ainsi, l'au moins une plaque est constituée d'un matériau poreux super isolant sous vide comprenant des particules micro-cellulaires ou nano-cellulaires à cellules ouvertes qui sont choisies de préférence parmi les silices de combustion, de précipitation ou de fusion nano-poreuse, les aérogels organiques ou minéraux, les mousses organiques comme par exemples les mousses de polyuréthane ou de polystyrène et les isolants à fibres.

Les mousses organiques micro-cellulaires de polystyrène ou de polyuréthane présentent des cellules dont la taille est comprise entre quelques dizaines et une centaine de microns. La densité optimale de ces mousses est de l'ordre de 40 kg/m³. Pour maintenir la conductivité thermique de ces mousses entre 4 et 10 mW/m.°K, il faut les mettre sous une pression sous vide inférieure à 0,1 millibar. De manière à maintenir ce niveau de vide dans l'enveloppe barrière, on introduit généralement différents "getters" ou absorbants de gaz au sein de l'enveloppe barrière.

Les aérogels organiques ou minéraux nano-cellulaires présentent des structures cellulaires encore plus fines, de l'ordre de quelques dizaines à une centaine de nanomètres. Ces matériaux sont avantageusement utilisés pour réaliser des âmes 4 isolantes conditionnées sous vide dans une enveloppe barrière 5 souple thermo-soudée. En effet, ces matériaux isolants nano-poreux ne nécessitent qu'une mise sous pression réduite de seulement 100 ou 200 millibars pour réaliser des super isolants présentant une conductivité thermique inférieure à 10 mW/m.°K.

Les silices de combustion, dite encore silices de pyrolyse, peuvent être comprimées à des densités comprises entre 100 kg/m³ et 200 kg/m³, sous forme de plaques pouvant être mises très rapidement sous vide. Elles présentent une excellente résistance à la compression et aux températures élevées, et présentent en outre l'avantage de ne pas comporter de composés organiques. Elles sont, par conséquent, largement utilisées pour protéger les structures de bâtiment par exemple, contre les risques d'incendie.

Pour renforcer la cohésion de ces plaques, on incorpore, dans le matériau poreux des plaques, des fibres minérales et de très faibles quantités de liants qui confèrent à ces plaques une tenue mécanique suffisante pour les manipuler à la pression atmosphérique, tout en conservant une grande souplesse et une très grande perméabilité du fait du retour élastique du matériau poreux. De ce fait, les silices de combustion se comportent comme des matériaux macro-poreux, ce qui facilite leur mise sous vide rapide, mais redeviennent des matériaux nano-poreux une fois conditionnées sous vide.

Un exemple de composition de silice de combustion à structure nano-poreuse renforcée par des fibres minérales est indiqué ci-après :
- SiO₂ : 70% en poids,
- FeO + TiO₂ ou ZrO₂ : 29% en poids,
- Al₂O₃ : 1 % en poids.

Le matériau poreux des plaques de l'âme 4 isolante peut en outre contenir des agents opacifiants.

L'enveloppe barrière 5 est composée de deux films multicouches thermosoudables comprenant un film barrière 9 pris en sandwich entre un film intérieur de scellage 8 en contact avec le matériau poreux super isolant de l'âme 4, et un film extérieur 6 en contact avec un film adhésif 7 reliant l'enveloppe barrière et les parements rigides 2.

Ces films multicouches thermosoudables comprennent par exemple :
- un ou plusieurs films barrières 9 comprenant une feuille mince d'aluminium d'épaisseur comprise entre 5 µm et 12 µm et/ou un film plastique métallisé ou revêtu d'oxyde, comme par exemple un film polyéthylène térephtalate (PET) ou polypropylène (PP) revêtu d'une mince couche d'aluminium déposée sous vide ou revêtu d'oxyde de silicium,
- un film intérieur de scellage 8 thermosoudable, comprenant un film polyéthylène (PE), polypropylène (PP) ou polyéthylène téréphtalate (PET) d'épaisseur comprise entre 3 µm et 60 µm,
- un film extérieur 6, assurant la protection de l'enveloppe barrière 5, et comprenant un film polyéthylène (PE) ou polypropylène (PP). Dans un des modes de réalisation de l'invention, ce film est revêtu d'un adhésif 7 présentant une aptitude à l'adhésion sur le parement 2 rigide par simple pression à température ambiante ou par activation thermique.
- des couches d'adhésif 7 de complexage permettant de réunir entre eux les différents films du film multicouche d'enveloppe barrière.

Nous allons maintenant indiquer un exemple de réalisation d'un film multicouche d'enveloppe barrière 5 selon lequel on superpose par complexage les films plastiques suivants, en partant de la face de l'enveloppe barrière 5 en contact avec le matériau poreux super isolant vers la face du parement 2 rigide :
polyéthylène (PE) /A1/ polyéthylène téréphtalate (PET) métallisé /A2/ PET métallisé /A3/ Polypropylène (PP).

Dans cette structure à sept couches, on prend en sandwich deux films de PET métallisés entre d'une part, un film de PE et d'autre part, un film de PP par l'intermédiaire de différents adhésifs A1, A2, A3. Les épaisseurs des différents constituants sont de l'ordre de 50 µm à 80 µm pour le PP et le PE, 20 µm à 50 µm pour le PET et de quelques microns pour les adhésifs. Il peut être envisagé de remplacer le film barrière étanche 9 à base de PET métallisé par une feuille d'aluminium de 5 µm à 12 µm d'épaisseur.

Les parements 2 rigides sont constitués de matériaux non poreux comme le verre, le métal, les plastiques et les matériaux composites. De préférence, les parements 2 sont des tôles métalliques, et plus préférentiellement en acier ou en aluminium. Ces tôles peuvent être éventuellement pré-peintes sur les deux faces de manière à être décorées ou protégées contre la corrosion.

Les parements 2 peuvent être préalablement formés notamment, par pliage, profilage, emboutissage ou formage à chaud, sous réserve de conserver des zones planes ou des surfaces développables venant en appui sur l'âme 4 isolante et servant de surface de liaison avec l'enveloppe barrière 5.

La face interne des parements 2 peut également être préalablement traitée pour faciliter l'adhésion du film multicouche d'enveloppe barrière sur le parement 2 ou pour protéger le parement 2 contre la corrosion.

Un premier procédé selon l'invention pour fabriquer un panneau 1 à structure composite 1 consiste à coller sur tout ou partie de la face interne de chacun des deux parements 2 rigides, au moins une partie d'un film d'enveloppe barrière 5, dont les dimensions sont supérieures à celles des parements 2, de manière à obtenir un niveau d'adhésion contrôlé des films sur les parements 2.

Puis, on place en vis à vis les faces internes des deux parements 2 revêtus d'un film d'enveloppe barrière 5, on scelle partiellement en périphérie les deux films multicouches revêtant chacun des deux parements, de manière à former une enveloppe barrière possédant au moins une ouverture, et on place l'ensemble dans une chambre à vide de manière à créer un vide contrôlé dans l'enveloppe barrière ouverte contenant l'âme.

Enfin, on scelle, de préférence par thermo-soudage sous vide, l'enveloppe barrière 5 sur toute sa périphérie de manière à y emprisonner l'âme 4 sous vide, et on rétablit la pression atmosphérique dans la chambre à vide pour former le panneau 1 à structure composite ainsi obtenue en laissant se rétracter l'enveloppe barrière 5 autour de l'âme 4.

Selon un mode de réalisation préféré de l'invention, juste après avoir placé en vis à vis les deux parements 2 revêtus de leur film d'enveloppe barrière 5, on scelle successivement sur trois côtés les deux films de manière à réunir les deux parements 2 pour former un sac enveloppe barrière 5 ouvert sur un côté, et on insère l'âme 4 dans le sac enveloppe barrière 5.

Puis, comme on l'a déjà vu, on place l'ensemble formé du sac contenant l'âme 4 et des deux parements 2 rigides dans une chambre à vide de manière à créer un vide dans le sac enveloppe barrière 5, on scelle, de préférence par thermo-soudage sous vide, le sac enveloppe barrière 5 sur toute sa périphérie de manière à y emprisonner l'âme 4 sous vide, et on rétablit la pression atmosphérique dans la chambre à vide pour former le panneau 1 à structure composite.

Pour coller le film d'enveloppe barrière 5 sur les parties planes ou développables de chacun des deux parements 2 rigides, on procède par colamination à froid ou à chaud :
- soit du film d'enveloppe barrière 5 pré-adhésivé, appliqué à l'aide d'un rouleau ou d'une presse sur le parement 2 rigide,
- soit du film d'enveloppe barrière 5 standard, appliqué à l'aide d'un rouleau ou d'une presse sur le parement 2 pré-adhésivé.

Lors de cette opération, il est nécessaire de contrôler de façon précise :
- soit l'étendue de la zone de lamination, en évitant de solidariser le film d'enveloppe barrière 5 à la périphérie du parement 2 rigide,
- soit l'intensité de l'adhésion développée entre le film d'enveloppe barrière 5 et le parement 2 rigide, en particulier sur la périphérie du parement 2.

En effet, une caractéristique du procédé selon l'invention est qu'il permet d'éviter que la rétraction de l'enveloppe barrière 5 autour de l'âme isolante 4, qui se produit lors de l'étape de la remise à l'air libre du panneau 1 à structure composite ne provoque des tensions dues à un étirement excessif, entraînant une micro-fissuration locale de l'enveloppe barrière 5 souple au voisinage des tranches en périphérie du panneau 1 à structure composite, susceptible de dégrader ses propriétés barrières.

A cet effet, un premier moyen consiste, selon l'invention, à délimiter en périphérie des parements 2 rigides une zone dans laquelle le film d'enveloppe barrière 5 n'est pas scellé au parement 2 rigide. Dans ce cas, la rétraction de l'enveloppe barrière 5 au voisinage des tranches de l'âme 4 isolante s'effectue de façon entièrement libre.

Pour solidariser le film d'enveloppe barrière 5 sur chacun des deux parements 2 rigides, on utilise les modes d'application et les adhésifs 7 et suivants :
1) Lamination à chaud du film d'enveloppe barrière 5 sur le parement 2 rigide. Pour cela on applique un film adhésif 7 activable à chaud soit sur la face interne du parement 2 rigide, soit sur la face externe du film d'enveloppe barrière 5, puis on calandre à chaud la face externe du film d'enveloppe barrière 5 sur la face interne du parement 2 rigide.
   Les adhésifs de ce type sont choisis parmi : les résines Ethylène Acétate de Vinyle (EVA), les polyéthylènes et les polypropylènes modifiés par greffage , les résines époxy contenant des nodules de polypropylène.
   Par exemple, si le film extérieur 6 du film d'enveloppe barrière 5 est constitué d'un film de PP, on utilise pour colaminer à chaud le film d'enveloppe barrière 5 sur le parement 2 rigide, le parement rigide pré-adhésivé par un film à base de polypropylène modifié par greffage.
2) Lamination à froid du film d'enveloppe barrière 5 sur le parement 2 rigide. Pour cela, on applique une couche d'adhésif 7 du type Pressure Sensitive Adhesive (PSA, ou adhésif sensible à la pression en langue française) présentant un pouvoir collant plus ou moins élevé à température ambiante soit sur la face interne du parement 2 rigide, soit la face externe du film d'enveloppe barrière 5, puis on calandre à froid la face externe du film d'enveloppe barrière 5 sur la face interne du parement 2 rigide,.

Les adhésifs de ce type sont soit des adhésifs liquides en solution ou en dispersion, à base d'acryliques ou de caoutchouc naturel, applicables par enduction au rouleau ou par pulvérisation, soit des adhésifs de type "hot melt" à 100% d'extrait sec applicable en voie fondue au travers d'une buse. Le type d'adhésif PSA est choisi en fonction de ses performances d'adhésion, qui initialement sont relativement faibles, mais qui évoluent progressivement dans le temps ou sous l'influence de la température, permettant ainsi de réaliser une liaison adhésive faible lors de l'application, et qui se consolide dans le temps.

Après l'application de la couche d'adhésif PSA, il est nécessaire de rapporter un film de protection, comme par exemple un papier siliconé ou un film anti-adhésif, pour protéger les parements 2 rigides ou les films d'enveloppe barrière 5 revêtus de l'adhésif PSA lors de leur stockage. Ce film de protection est ensuite éliminé avant la lamination du film d'enveloppe barrière 5 sur le parement rigide.

En réalisant des épargnes sur la surface enduite par le PSA, on supprime la possibilité de collage du film d'enveloppe barrière 5 sur la périphérie du parement 2 rigide, de manière à laisser la rétraction du film d'enveloppe barrière 5 s'opérer librement lors de la remise à pression atmosphérique du panneau 1 à structure composite. Il est également possible d'éliminer localement l'effet d'adhésion en rapportant sur le film d'enveloppe barrière 5 ou sur le parement 2 rigide une bande de film anti-adhésif.

L'utilisation de PSA pour pré-adhésiver les films d'enveloppe barrière 5 ou les parements 2 rigides apporte davantage de flexibilité et de productivité par rapport à l'utilisation d'adhésifs activables à chaud. En effet, les adhésifs les mieux adaptés au collage de surfaces barrières et non poreuses sont les adhésifs sans solvant qui n'exigent pas de phase de cuisson ou d'activation thermique. Avec des systèmes pré-adhésivés de type PSA, on évite ainsi d'avoir à mettre en oeuvre des presses chauffantes ou des étuves de grande capacité, avec des durées de cycles de production de plusieurs minutes.

Le panneau 1 à structure composite obtenue après avoir cassé le vide, présente une épaisseur comprise entre 1 et 3 centimètres, est ensuite soumise à diverses opérations complémentaires de finition qui consistent par exemple :
- à replier l'excédent du film d'enveloppe barrière 5 dans l'espace situé entre les bords des deux parements 2 rigides et la tranche de l'âme 4 isolante,
- à remplir cet espace d'un matériau de protection du type mousse profilés de faible conductivité thermique, ce qui permet non seulement de réaliser une finition esthétique et fonctionnelle, mais encore de minimiser les ponts thermiques,
- à disposer dans cette zone des liaisons ou des éléments de fixation du panneau 1 structure composite permettant de solidariser de façon complémentaire les deux parements 2 rigides.

Un second moyen selon l'invention consiste à limiter l'adhésion développée entre le film d'enveloppe barrière 5 et le parement rigide 2 à une valeur inférieure à la tension d'apparition de fissures dans le film d'enveloppe barrière 5, de manière à ce que la rétraction de l'enveloppe barrière 5 ne crée aucune diminution de ses performances barrières dans les zones des plis. En limitant la force nécessaire au décollement du film d'enveloppe barrière 5 du parement 2 rigide à une fraction pré-déterminée de la résistance au seuil d'écoulement de ce film d'enveloppe barrière 5, mesurée dans un essai de traction, on élimine les risques d'endommagement du film d'enveloppe barrière 5.

La liaison entre le film d'enveloppe barrière 5 et les parties planes du parement 2 rigide se trouve renforcée sous l'effet de la pression atmosphérique qui s'applique à la fois sur le parement 2 rigide et sur le film d'enveloppe barrière 5 colaminé. Il n'est alors pas nécessaire de réaliser un niveau d'adhésion très élevé entre le film d'enveloppe barrière 5 et le parement 2 rigide pour obtenir un panneau 1 à structure composite présentant une rigidité élevée.

Selon un autre mode de réalisation préféré de l'invention, pour fabriquer un panneau 1 à structure composite, dont la forme est par exemple quadrilatère, on forme d'abord un sac, dont les dimensions sont supérieures à celles des parements 2 rigides, en scellani successivement sur trois côtés les deux films d'enveloppe barrières 5.

Puis, on colle sur une partie des faces internes de chacun des deux parements 2 rigides, au moins une partie du film d'enveloppe barrière 5 du sac, de manière à obtenir un niveau d'adhésion contrôlé du film d'enveloppe barrière 5 sur les parements 2 rigides, on sépare les deux parements 2, faces internes en vis-à-vis, de façon à ouvrir le sac, et on insère l'âme 4 isolante dans le sac.

Ensuite, on place l'ensemble dans une chambre sous vide de manière à créer un vide contrôlé, dans le sac enveloppe barrière 5 contenant l'âme 4 isolante, on scelle, sur le quatrième côté, de préférence par thermo- soudage sous vide, en périphérie, les deux films du sac, de manière à fermer le sac et à former l'enveloppe barrière 5, et à y emprisonner sous vide l'âme 4 isolante, entre les deux parements 2 rigides.

Enfin, on rétablit la pression atmosphérique dans la chambre à vide pour former le panneau 1 à structure composite ainsi obtenue en laissant se contracter l'enveloppe barrière 5 autour de l'âme 4 isolante.

Selon cette forme préférentielle de l'invention, l'opération préliminaire de soudage à pression atmosphérique du film d'enveloppe barrière 5 en périphérie pour former le sac, sauf sur une partie du bord, s'effectue avant insertion de l'âme 4 isolante entre les parements 2 rigides colaminés avec le film d'enveloppe barrière 5.

Ce procédé facilite la réalisation d'une soudure de bonne qualité en évitant la formation de plis de l'enveloppe barrière 5, les faces planes des deux parements 2 rigides pouvant être alors superposées de manière précise. On insère ensuite, dans le sac ainsi formé, l'âme 4 isolante en prenant soin de ne pas contaminer par des débris de matériau isolant ou des poussières la zone destinée à la dernière soudure devant être réalisée sous vide A cet effet, il est avantageux de conditionner le matériaux poreux isolant dans une membrane préalablement à son insertion dans l'enveloppe barrière 5, cela lui confère en outre une rigidité plus élevée et facilite sa manipulation.

Les procédés décrits dans l'invention permettent de combiner dans un même panneau 1 à structure composite plusieurs éléments isolants juxtaposés, conditionnés individuellement sous vide dans des enveloppes barrières séparées. Ainsi, il est possible de réaliser des panneaux 1 à structure composite dans lesquels il est réservé des zones de découpe sans détruire la cohésion du panneau.

Ils permettent également de réaliser des panneaux à structure composite de forme complexe, et de ménager des possibilités de perçage dans des zones déterminées du panneau à structure composite sans que ces perçages n'affectent l'intégrité de la structure globale.

On a représenté dans la figure 3, une finition de la tranche du panneau 1 à structure composite selon l'invention, dans laquelle les rainures de renfort et/ou de fixation 3 des parements rigides 2 forment une bordure en saillie pouvant être comblée d'un matériau isolant expansé. Ce type de finition de la tranche du panneau à structure composite évite la formation d'un pont thermique lorsqu'on joint deux panneaux à structures composites bout à bout.

Les panneaux à structures composites selon l'invention présentent les avantages suivants :
- l'enveloppe barrière souple est intégralement protégée mécaniquement par les parements rigides,
- les parements rigides assurent un effet barrière supplémentaire permettant d'améliorer de façon très importante le maintien sous vide de l'âme isolante,
- l'utilisation d'un très faible grammage d'adhésif pour solidariser l'enveloppe barrière contenant l'âme isolante et les deux parements rigides, rend le panneau à structure composite peu combustible.

## Revendications

1. Procédé de fabrication d'un panneau (1) à structure composite comprenant deux parements (2) rigides sensiblement plans, reliés entre eux en insérant entre les parties planes de leur face interne, une âme (4) comprenant un matériau poreux super isolant à structure micro-cellulaire ou nano-cellulaire à cellules ouvertes, ladite âme étant enfermée dans une enveloppe barrière (5) étanche, fermée sous vide, procédé **caractérisé en ce qu'**il comprend les étapes suivantes :
- on colle sur tout ou partie de la face interne de chacun des deux parements (2) rigides, au moins une partie d'un film d'enveloppe barrière (5), dont les dimensions sont supérieures à celles des parements (2), de manière à obtenir un niveau d'adhésion contrôlé des films,
- on place en vis à vis les faces internes des deux parements (2) revêtus d'un film d'enveloppe barrière (5),
- on insère l'âme (4) entre les deux parements (2),
- on scelle partiellement en périphérie les deux films revêtant chacun des deux parements (2), de manière à former une enveloppe barrière (5) possédant au moins une ouverture,
- on place l'ensemble formé de l'enveloppe barrière (5) ouverte contenant l'âme (4) et des deux parements (2) dans une chambre à vide de manière à créer un vide contrôlé dans l'enveloppe barrière (5) ouverte,
- on scelle l'enveloppe barrière (5) sur toute sa périphérie de manière à y emprisonner l'âme (4) sous vide, et
- on rétablit la pression atmosphérique dans la chambre à vide pour former le panneau (1) à structure composite ainsi obtenue en laissant se rétracter l'enveloppe barrière (5) autour de l'âme (4).

2. Procédé selon la revendication 1, **caractérisé en ce qu'**entre l'étape de placement en vis à vis des deux parements (2) revêtus d'un film d'enveloppe barrière (5), et l'étape de rétablissement de la pression atmosphérique dans la chambre à vide :
- on scelle successivement sur trois côtés les deux films de manière à réunir les deux parements (2) pour former un sac enveloppe barrière (5) ouvert sur un côté,
- on insère l'âme (4) dans le sac enveloppe barrière (5),
- on place l'ensemble formé du sac contenant l'âme (4) et des deux parements (2) rigides dans une chambre à vide de manière à créer un vide dans le sac enveloppe barrière (5), et
- on scelle le sac enveloppe barrière (5) sur toute sa périphérie de manière à y emprisonner l'âme (4) sous vide.

3. Procédé de fabrication d'un- panneau (1) à structure composite comprenant deux parements (2) rigides sensiblement plans, reliés entre eux en insérant entre les parties planes de leur face interne, une âme (4) comprenant un matériau poreux super isolant à structure micro-cellulaire ou nano-cellulaire à cellules ouvertes, ladite âme (4) étant enfermée dans une enveloppe barrière (5) étanche, fermée sous vide et formée par deux films soudés, procédé **caractérisé en ce qu'**il comprend les étapes suivantes :
- on scelle successivement sur trois côtés deux films d'enveloppe barrière (5), de manière à former un sac dont les dimensions sont supérieures à celles des parements (2),
- on colle sur tout ou partie de la face interne de chacun des deux parements (2) rigides, au moins une partie du sac enveloppe barrière (5), de manière à obtenir un niveau d'adhésion contrôlé du sac enveloppe barrière (5) sur les parements (2),
- on sépare les deux parements (2) de façon à ouvrir le sac,
- on insère l'âme (4) dans le sac enveloppe barrière (5) ouvert, entre les parements (2),
- on place l'ensemble formé du sac enveloppe barrière (5) contenant l'âme (4) et des deux parements (2) rigides dans une chambre à vide de manière à créer un vide contrôlé, dans le sac enveloppe barrière (5),
- on scelle totalement le sac enveloppe barrière pour former l'enveloppe barrière et de manière à y emprisonner l'âme sous vide, et
- on rétablit la pression atmosphérique dans la chambre à vide pour former le panneau (1) à structure composite ainsi obtenue en laissant se rétracter l'enveloppe barrière (5) autour de l'âme (4) isolante.

4. Procédé selon l'une quelconque des revendications 1 à 3, **caractérisé en ce que** l'enveloppe barrière (5) est composée d'un film multicouche comprenant au moins un film barrière (9) pris en sandwich entre un film intérieur de scellage (8) en contact avec le matériau poreux super isolant de l'âme 4, et un film extérieur (6) en contact avec un film adhésif (7) reliant l'enveloppe barrière (5) et les parements rigides 2.

5. Procédé selon la revendication 4, **caractérisé en ce que** l'au moins un film barrière (9) du film multicouche d'enveloppe barrière (5) comprend, une feuille mince d'aluminium d'épaisseur comprise entre 5 µm et 12 µm, un film plastique métallisé ou revêtu d'oxyde, une combinaison de ladite feuille mince avec ledit film plastique.

6. Procédé selon la revendication 4, **caractérisé en ce que** le film intérieur de scellage (8) thermosoudable comprend un film polyéthylène (PE), polypropylène (PP) ou polyéthylène téréphtalate (PET), d'épaisseur comprise entre 3 µm et 60 µm.

7. Procédé selon la revendication 4, **caractérisé en ce que** le film extérieur (6) comprend un film polyéthylène (PE) ou polypropylène (PP).

8. Procédé selon l'une quelconque des revendications 1 à 7, **caractérisé en ce que** l'âme (4) isolante comprend au moins une plaque constituée d'un matériau poreux super isolant sous vide comprenant des particules micro-cellulaires ou nano-cellulaires à cellules ouvertes.

9. Procédé selon l'une quelconque des revendications 1 à 8, **caractérisé en ce que** les particules micro-cellulaires ou nano-cellulaires à cellules ouvertes de l'âme 4 sont choisies parmi les silices de combustion, de précipitation ou de fusion nano-poreuse, les aérogels organiques ou minéraux, les mousses organiques, et les isolants à fibres.

10. Procédé selon l'une quelconque des revendications 1 à 9, **caractérisé en ce que** pour coller le film d'enveloppe barrière (5) sur la face interne du parement (2) rigide, on applique un film adhésif (7) polymère activable à chaud soit sur la face externe du du film d'enveloppe barrière (5), soit sur la face interne du parement (2) rigide, puis on calandre à chaud la face externe du film d'enveloppe barrière (5) sur la face interne du parement rigide.

11. Procédé selon la revendication 10, **caractérisé en ce que** le film adhésif (7) polymère activable à chaud est choisi parmi les résines Ethylène Acétate de Vinyle (EVA), les polyéthylènes et les polypropylènes modifiés par greffage , les résines époxy contenant des nodules de polypropylène.

12. Procédé selon l'une quelconque des revendications 1 à 9, **caractérisé en ce que** pour coller le film d'enveloppe barrière (5) sur la face interne du parement (2) rigide, on applique une couche d'adhésif type Pressure sensitive adhesive (PSA ou adhésif sensible à la pression) soit sur la face externe du film d'enveloppe barrière (5), soit sur la face interne du parement (2) rigide, puis on calandre à froid la face externe du film d'enveloppe barrière (5) sur la face interne du parement (2) rigide.

13. Procédé selon la revendication 12, **caractérisé en ce que** l'adhésif type PSA est choisi parmi les adhésifs liquides en solution ou en dispersion, à base d'acryliques ou de caoutchouc naturel, et les adhésifs de type "hot melt" à 100% d'extrait sec.

14. Procédé selon l'une quelconque des revendications 1 à 13, **caractérisé en ce que** les parements (2) rigides sont constitués de matériaux non poreux choisis parmi le verre, le métal, les plastiques et les matériaux composites.

15. Procédé selon la revendication 14, **caractérisé en ce que** les parements (2) métalliques sont en acier ou en aluminium.

## Patentansprüche

1. Verfahren zum Herstellen einer Verbundplatte (1), die zwei steife Verkleidungen (2) umfasst, die im Wesentlichen eben sind und untereinander durch Einfügen einer Seele (4) zwischen die ebenen Teile ihrer inneren Seite verbunden werden, wobei die Seele (4) einen porigen superisolierenden Werkstoff mit Mikrozellen- oder Nanozellenstruktur mit offenen Zellen umfasst und in einen dichten Barrieremantel (5), der unter Vakuum geschlossen wird, eingeschlossen ist, **dadurch gekennzeichnet, dass** es die folgenden Schritte umfasst:
- man klebt auf die ganze oder einen Teil der inneren Seite jeder der zwei steifen Verkleidungen (2) mindestens einen Teil einer Barrieremantelfolie (5), deren Abmessungen größer sind als die der Verkleidungen (2), so dass man ein kontrolliertes Haftungsniveau der Folien erzielt,
- man ordnet die inneren Seiten der zwei mit einer Barrieremantelfolie (5) beschichteten Verkleidungen (2) einander gegenüber an,
- man fügt die Seele (4) zwischen die zwei Verkleidungen (2) ein,
- man versiegelt die zwei Folien, die jede der zwei Verkleidungen (2) beschichten, an der Peripherie teilweise, um einen Barrieremantel (5) zu bilden, der mindestens eine Öffnung besitzt,
- man stellt die aus dem offenen Barrieremantel (5), der die Seele (4) enthält, und den zwei Verkleidungen (2) gebildete Einheit in eine Vakuumkammer, um in dem offenen Barrieremantel (5) ein kontrolliertes Vakuum zu schaffen,
- man versiegelt den Barrieremantel (5) auf seiner ganzen Peripherie, so dass die Seele (4) darin unter Vakuum eingeschlossen ist, und
- man stellt den Atmosphärendruck in der Vakuumkammer wieder her, um die Verbundplatte (1), die so erzielt wurde, zu bilden, indem man es dem Barrieremantel (5) erlaubt, sich um die Seele (4) zusammenzuziehen.

2. Verfahren nach Anspruch 1, **dadurch gekennzeichnet, dass** man zwischen dem Schritt des Anordnens der zwei mit einer Barrieremantelfolie (5) beschichteten Verkleidungen (2) einander gegenüber und dem Schritt des Wiederherstellens des Atmosphärendrucks in der Vakuumkammer:
- nacheinander die zwei Folien auf drei Seiten so versiegelt, dass man die zwei Verkleidungen (2) vereint, um einen Barrieremantelsack (5) zu bilden, der auf einer Seite offen ist,
- die Seele (4) in den Barrierenmantelsack (5) einfügt,
- die aus dem die Seele (4) enthaltenden Sack und den zwei steifen Verkleidungen (2) gebildete Einheit in eine Vakuumkammer stellt, um in dem Barrieremantelsack (5) ein Vakuum herzustellen, und
- den Barrieremantelsack (5) auf seiner ganzen Peripherie versiegelt, so dass die Seele (4) darin unter Vakuum eingeschlossen ist.

3. Verfahren zum Herstellen einer Verbundplatte (1), die zwei steife, im Wesentlichen ebene Verkleidungen (2) umfasst, die untereinander verbunden werden, indem zwischen die ebenen Teile ihrer inneren Seite eine Seele (4) eingefügt wird, die einen superisolierenden porigen Werkstoff mit Mikrozellen- oder Nanozellenstruktur mit offenen Zellen umfasst, wobei die Seele (4) in einem dichten Barrieremantel (5) eingeschlossen ist, der unter Vakuum geschlossen wird und aus zwei zusamengeschweißten Folien besteht, **dadurch gekennzeichnet, dass** es die folgenden Schritte umfasst:
- man versiegelt nacheinander auf drei Seiten zwei Barrieremantelfolien (5), um einen Sack zu bilden, dessen Abmessungen größer sind als die der Verkleidungen (2),
- man klebt auf die ganze oder einen Teil der inneren Seite jeder der zwei steifen Verkleidungen (2) mindestens einen Teil des Barrieremantelsacks (5), so dass man ein kontrolliertes Haftungsniveau des Barrieremantelsacks (5) auf den Verkleidungen (2) erzielt,
- man trennt die zwei Verkleidungen (2), so dass der Sack geöffnet wird,
- man fügt die Seele (4) in den offenen Barrieremantelsack (5) zwischen die Verkleidungen (2) ein,
- man stellt die aus dem Barrieremantelsack (5), der die Seele (4) enthält, und den zwei steifen Verkleidungen (2) gebildete Einheit in eine Vakuumkammer, um in dem Barrieremantelsack (5) ein kontrolliertes Vakuum zu schaffen,
- man versiegelt den Barrieremantelsack komplett, um den Barrieremantel zu bilden und darin die Seele unter Vakuum einzuschließen, und
- man stellt den Atmosphärendruck in der Vakuumkammer wieder her, um die so erhaltene Verbundplatte (1) zu bilden, indem man es dem Barrieremantel (5) erlaubt, sich um die isolierende Seele (4) zusammenzuziehen.

4. Verfahren nach einem der Ansprüche 1 bis 3, **dadurch gekennzeichnet, dass** der Barrieremantel (5) aus einer mehrschichtigen Folie besteht, die mindestens eine Barrierefolie (9) umfasst, die im Sandwich zwischen einer inneren Versiegelungsfolie (8), die mit dem superisolierenden porigen Werkstoff der Seele (4) in Berührung ist, und einer äußeren Folie (6), die mit einer Klebefolie (7) in Berührung ist, die den Barrieremantel (5) und die steifen Verkleidungen (2) verbindet, liegt.

5. Verfahren nach Anspruch 4, **dadurch gekennzeichnet, dass** mindestens eine Barrierefolie (9) der mehrschichtigen Folie des Barrieremantels (5) ein dünnes Aluminiumblatt mit einer Stärke zwischen 5 µm und 12 µm, eine metallisierte oder mit Oxid beschichtete Kunststofffolie, eine Kombination des dünnen Blatts mit der Kunststofffolie umfasst.

6. Verfahren nach Anspruch 4, **dadurch gekennzeichnet, dass** die wärmeschweißbare innere Versiegelungsfolie (8) eine Folie aus Polyethylen (PE), Polypropylen (PP) oder Polyethylenterephthalat (PET) mit einer Stärke zwischen 3 µm und 60 µm umfasst.

7. Verfahren nach Anspruch 4, **dadurch gekennzeichnet, dass** die äußere Folie (6) eine Folie aus Polyethylen (PE) oder aus Polypropylen (PP) umfasst.

8. Verfahren nach einem der Ansprüche 1 bis 7, **dadurch gekennzeichnet, dass** die isolierende Seele (4) mindestens eine Platte umfasst, die aus einem superisolierenden porigen Werkstoff unter Vakuum besteht, der Mikrozellen- oder Nanozellenpartikel mit offenen Zellen enthält.

9. Verfahren nach einem der Ansprüche 1 bis B, **dadurch gekennzeichnet, dass** die Mikrozellen- oder Nanozellenpartikel mit offenen Zellen der Seele (4) ausgewählt werden aus pyrogener Kieselsäure, Fällungskieselsäure oder nanoporösem Quarzglas, organischen oder mineralischen Aerogelen, den organischen Schaumstoffen und den Isolationsstoffen mit Fasern.

10. Verfahren nach einem der Ansprüche 1 bis 9, **dadurch gekennzeichnet, dass** man zum Kleben der Barrieremantelfolie (5) auf der inneren Seite der steifen Verkleidung (2) eine warm aktivierbare Polymerklebefolie (7) entweder auf die äußere Seite der Barrieremantelfolie (5) oder auf die innere Seite der steifen Verkleidung (2) anlegt und dann die äußere Seite der Barrieremantelfolie (5) auf die innere Seite der steifen Verkleidung (2) heiß kalandriert.

11. Verfahren nach Anspruch 10, **dadurch gekennzeichnet, dass** die warm aktivierbare Polymerklebefolie (7) ausgewählt wird aus Ethylenvinylacetatharzen (EVA), Polyethylenen und gepfropften Polypropylenen, Epoxidharzen, die Polypropylenknötchen enthalten.

12. Verfahren nach einem der Ansprüche 1 bis 9, **dadurch gekennzeichnet, dass** man zum Kleben der Barrieremantelfolie (5) auf die innere Seite der steifen Verkleidung (2) eine Klebstoffschicht des Typs Pressure Sensitive Adhesive (PSA oder druckempfindlicher Klebstoff) entweder auf die äußere Seite der Barrieremantelfolie (5) oder auf die innere Seite der steifen Verkleidung (2) anlegt und dann die äußere Seite der Barrieremantelfolie (5) auf die innere Seite der steifen Verkleidung (2) kalt kalandriert.

13. Verfahren nach Anspruch 12, **dadurch gekennzeichnet, dass** der Klebstoff des Typs PSA ausgewählt wird aus den flüssigen Klebstoffen in Lösung oder Dispersion auf der Grundlage von Acrylen oder Naturkautschuk, und den Klebstoffen des Typs "hot melt" mit 100 % Trockenmasse.

14. Verfahren nach einem der Ansprüche 1 bis 13, **dadurch gekennzeichnet, dass** die steifen Verkleidungen (2) aus nicht porigen Werkstoffen bestehen, die ausgewählt werden aus Glas, Metall, Kunststoffen und Verbundwerkstoffen.

15. Verfahren nach Anspruch 14, **dadurch gekennzeichnet, dass** die metallischen Verkleidungen (2) aus Stahl oder aus Aluminium bestehen.

## Claims

1. Process for manufacturing a panel (1) of composite structure, comprising two substantially plane rigid facings (2) that are connected together by inserting, between the plane portions of their internal faces, a core (4) comprising a porous superinsulation material of microcellular or nanocellular structure with open cells, the said core being enclosed in a vacuum-tight impermeable barrier envelope (5), which process is **characterized in that** it comprises the following steps:
- at least one portion of a barrier envelope film (5) is adhesively bonded to all or part of the internal face of each of the two rigid facings (2), the dimensions of the barrier envelope film (5) being greater than those of the facings (2), so as to obtain a controlled level of adhesion of the films;
- the internal faces of the two facings (2) covered with a barrier envelope film (5) are placed so as to face each other;
- the core (4) is inserted between the two facings (2);
- the two films each covering the two facings (2) are partially sealed around the periphery, so as to form a barrier envelope (5) possessing at least one opening;
- the whole assembly, formed from the open barrier envelope (5) containing the core (4) and from the two facings (2), is placed in a vacuum chamber so as to create a controlled vacuum in the open barrier envelope (5);
- the barrier envelope (5) is sealed around its entire periphery so as to imprison the core (4) under vacuum therein; and
- atmospheric pressure is re-established in the vacuum chamber, in order to form the panel (1) of composite structure thus obtained, by letting the barrier envelope (5) shrink around the core (4).

2. Process according to Claim 1, **characterized in that**, between the step of placing the two facings (2) covered with a barrier envelope film (5) so as to face each other and the step of re-establishing atmospheric pressure in the vacuum chamber:
- the two films are sealed in succession along three sides, so as to join the two facings (2) together in order to form a barrier envelope bag (5) open on one side;
- the core (4) is inserted into the barrier envelope bag (5);
- the whole assembly, formed from the bag containing the core (4) and from the two rigid facings (2), is placed in a vacuum chamber so as to create a vacuum in the barrier envelope bag (5); and
- the barrier envelope bag (5) is sealed around its entire periphery so as to imprison the core (4) under vacuum therein.

3. Process for manufacturing a panel (1) of composite structure, comprising two substantially plane rigid facings (2) joined together by inserting, between the plane portions of their internal faces, a core (4) comprising a porous superinsulation material of microcellular or nanocellular structure with open cells, the said core (4) being enclosed in a vacuum-tight impermeable barrier envelope (5) formed by two films welded together, which process is **characterized in that** it comprises the following steps:
- two barrier envelope films (5) are sealed in succession along three sides so as to form a bag, the dimensions of which are larger than those of the facings (2);
- at least one portion of the barrier envelope bag (5) is adhesively bonded to all or part of the internal face of each of the two rigid facings (2) so as to obtain a controlled level of adhesion of the barrier envelope bag (5) to the facings (2);
- the two facings (2) are separated so as to open the bag;
- the core (4) is inserted, between the facings (2), into the open barrier envelope bag (5);
- the whole assembly, formed from the barrier envelope bag (5) containing the core (4) and from the two rigid facings (2), is placed in a vacuum chamber so as to create a controlled vacuum in the barrier envelope bag (5);
- the barrier envelope bag is completely sealed so as to form the barrier envelope and to imprison the core under vacuum therein; and
- atmospheric pressure is re-established in the vacuum chamber in order to form the panel (1) of composite structure thus obtained, by allowing the barrier envelope (5) to shrink around the insulating core (4).

4. Process according to any one of Claims 1 to 3, **characterized in that** the barrier envelope (5) is composed of a multilayer film comprising at least one barrier film (9) sandwiched between an internal sealing film (8), in contact with the porous superinsulation material of the core (4), and an external film (6), in contact with an adhesive film (7) that joins the barrier envelope (5) to the rigid facings (2).

5. Process according to Claim 4, **characterized in that** at least one barrier film (9) of the multilayer barrier envelope film (5) comprises a thin aluminium foil with a thickness of between 5 µm and 12 µm, a metallized or oxide-coated plastic film, or a combination of the said thin foil with the said plastic film.

6. Process according to Claim 4, **characterized in that** the heat-sealable internal sealing film (8) comprises a polyethylene (PE), polypropylene (PP) or polyethylene terephthalate (PET) film with a thickness of between 3 µm and 60 µm.

7. Process according to Claim 4, **characterized in that** the external film (6) comprises a polyethylene (PE) or polypropylene (PP) film.

8. Process according to any one of Claims 1 to 7, **characterized in that** the insulating core (4) comprises at least one sheet made of a porous vacuum superinsulation material comprising microcellular or nanocellular particles with open cells.

9. Process according to any one of Claims 1 to 8, **characterized in that** the microcellular or nanocellular particles with open cells of the core (4) are chosen from nanoporous fumed, precipitated or fused silicas, organic or mineral aerogels, organic foams and fibre-based insulators.

10. Process according to any one of Claims 1 to 9, **characterized in that**, to bond the barrier envelope film (5) to the internal face of the rigid facing (2), a heat-activatable polymer adhesive film (7) is applied either to the external face of the barrier envelope film (5) or to the internal face of the rigid facing (2), and then the external face of the barrier envelope film (5) is hot-calendered onto the internal face of the rigid facing.

11. Process according to Claim 10, **characterized in that** the heat-activatable polymer adhesive film (7) is chosen from ethylene/vinyl acetate (EVA) resins, graft-modified polyethylenes and polypropylenes, and epoxy resins containing polypropylene nodules.

12. Process according to any one of Claims 1 to 9, **characterized in that**, to bond the barrier envelope film (5) to the internal face of the rigid facing (2), a layer of adhesive of the PSA (pressure-sensitive adhesive) type is applied either to the external face of the barrier envelope film (5) or to the internal face of the rigid facing (2), and then the external face of the barrier envelope film (5) is cold-calendered onto the internal face of the rigid facing (2).

13. Process according to Claim 12, **characterized in that** the PSA-type adhesive is chosen from liquid adhesives, in solution or as a dispersion, based on acrylics or natural rubber, and hot-melt adhesives with a 100% solids content.

14. Process according to any one of Claims 1 to 13, **characterized in that** the rigid facings (2) are made of non-porous materials chosen from glass, metals, plastics and composites.

15. Process according to Claim 14, **characterized in that** the metal facings (2) are made of steel or aluminium.
